# EUROPEAN PATENT APPLICATION

(11) **EP 4 538 011 A1**
(43) Date of publication of application: **16.04.2025**
(21) Application number: 24206049.9
(22) Date of filing: 11.10.2024
(51) Int. Cl.: B29C 33/00, B29C 33/02, B29C 39/10, B29C 44/12, B29D 23/00, F16L 59/20, B29L 23/00

(54) **FIELD JOINT MOLD ASSEMBLY AND METHOD OF INSULATING A FIELD JOINT**

(30) Priority: 11.10.2023 US 202363589458 P
(71) Applicant: Bayou HoldCo, Inc., New Iberia Louisiana 70560 (US)
(72) Inventor: PIRIE, Strewn, Youngsville, LA 70592 (US)
(74) Representative: Brand Murray Fuller LLP

(57) **Abstract**

A field joint mold assembly has a mold body for defining a mold cavity around the field joint section of a pipe. An injection port opens through the mold body such that curable insulation material can be imparted through the injection port into the mold cavity. A heating system is mounted on the mold body for uniformly heating the mold body to an elevated temperature to promote even elevated temperature distribution inside the mold cavity. To insulate a field joint, curable insulation material is injected into the mold cavity and cured. While injecting and/or curing, heat is conducted from a heating system to majority of a surface area of the mold body to uniformly heat the mold cavity to an elevated temperature.

## Description

### CROSS-REFERENCE TO RELATED APPLICATION

This application claims priority to US Provisional Patent Application No. 63/589,458, which is hereby incorporated by reference in its entirety.

### FIELD

This disclosure generally pertains to a field joint mold assembly and a method of insulating a field joint.

### BACKGROUND

In the oil and gas industry, there is a need for insulated pipes. Insulated pipes are typically made in lengths of 40-80 feet. Each individual insulated pipe comprises a metal carrier pipe and polymeric insulation formed along a majority of the length of the metal carrier pipe in a factory. When each individual pipe is manufactured, the end portions of the pipe are left exposed, i.e., uncovered by the insulation material. This allows individual insulated pipes to be joined together end-to-end in the field. Field joints are created by welding pipes end-to-end, which joins the two pipes together as a pipe assembly. Subsequently, the un-insulated end portions of the two pipes that have been welded together (called a "field joint section" of the pipe assembly) must be insulated.

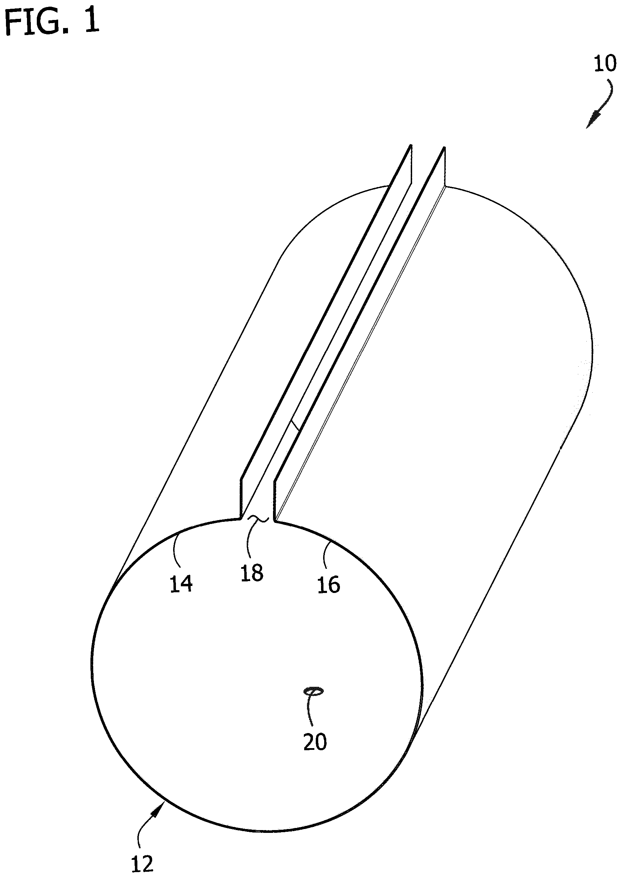

Referring to FIG. 1, a conventional field joint mold for forming insulation on a field joint section of a pipe assembly is generally indicated at reference number 10. The field joint mold 10 comprises a carbon steel sheet metal mold body 12. The mold body 12 has a first end portion and a second end portion spaced apart longitudinally and a first longitudinal edge margin 14 and an opposite second longitudinal edge margin 16 spaced apart along a width of the sheet metal. The sheet metal body 12 has been worked into a "clamshell"-type field joint mold shape such that the width of the body is circular and the first longitudinal edge margin 14 opposes the second longitudinal edge margin 16 with a small longitudinal gap 18 therebetween. An injection port 20 extends through the sheet metal mold body 12 at a location diametrically opposite the gap 18.

To use the conventional field joint mold 10, the mold body 12 is spread apart so that the gap 18 expands. The mold body 12 is then fitted onto the field joint section of the pipe assembly (not shown). Subsequently, the mold body 12 is tightened onto the field joint section. The first end portion of the mold body 12 is clamped onto the end portion of the insulation of one of the insulated pipes, and the second end portion of the mold body is clamped onto the end portion of the insulation of the other insulated pipe. At this point, the mold body 12 forms a mold cavity around the field joint section. Before filling the mold, one or more technicians use gas torches to pre-heat the mold body 12. Subsequently, curable insulation material is injected into the mold cavity through the injection port to fill the mold cavity. The insulation material cures. Then the mold is removed for reuse in forming field joint insulation at another field joint section.

### SUMMARY

In one aspect, a field joint mold assembly comprises a mold body configured to be disposed on a field j oint section of a pipe assembly such that the mold body defines a mold cavity around the field joint section. An injection port opens through the mold body such that curable insulation material can be imparted through the injection port into the mold cavity. A heating system is mounted on the mold body for uniformly heating the mold body to an elevated temperature to promote even elevated temperature distribution inside the mold cavity.

In another aspect, a method of insulating a field joint comprises injecting curable insulation material into a mold cavity defined by a field joint mold assembly disposed on a field joint section of a pipe assembly. The curable insulation material in the mold cavity is cured to form cured insulation for insulating the field joint section of the pipe assembly. While performing at least one of said injecting and said curing, heat is conducted from a heating system to majority of a surface area of a form of the field joint mold assembly to uniformly heat the mold cavity to an elevated temperature.

Other aspects and features will be apparent hereinafter.

### BRIEF DESCRIPTION OF THE DRAWINGS

FIG. 1 is a perspective of a prior art field j oint mold;
FIG. 2 is a perspective of an insulated pipe assembly with a field joint mold assembly of the present disclosure operatively mounted on the insulated pipe assembly for insulating a field joint section of the insulated pipe assembly;
FIG. 3 is a radial cross section showing the insulated pipe assembly in the configuration of FIG. 2;
FIG. 4 is an elevation of the insulated pipe assembly as configured in FIG. 2, wherein hidden features are shown in broken lines;
FIG. 5 is a perspective of the field joint mold assembly;
FIG. 6 is an end elevation of the field joint mold assembly; and
FIG. 7 is a perspective of a mold body of the field joint mold assembly.

Like reference numbers and designations in the various drawings indicate like elements.

### DETAILED DESCRIPTION

The inventor believes that the conventional field joint mold 10 described above can be improved. More particularly, the inventor believes that the requirement for using gas torches to heat the mold body 12 creates undesirable fire and burn hazards. Moreover, open flames may not be compatible with advanced insulation materials. Still furthermore, the inventor recognizes that gas torches apply heat in a focused manner, with each torch generating heat at only a single point along the mold body. Handheld gas torches also lack temperature control accuracy. Accordingly, as explained more fully below, this disclosure provides exemplary embodiments of a field joint mold and methods of forming field joint insulation that employ a controlled heating system to uniformly heat a mold body without an open flame to promote even heat distribution inside a mold cavity during the field joint insulation process.

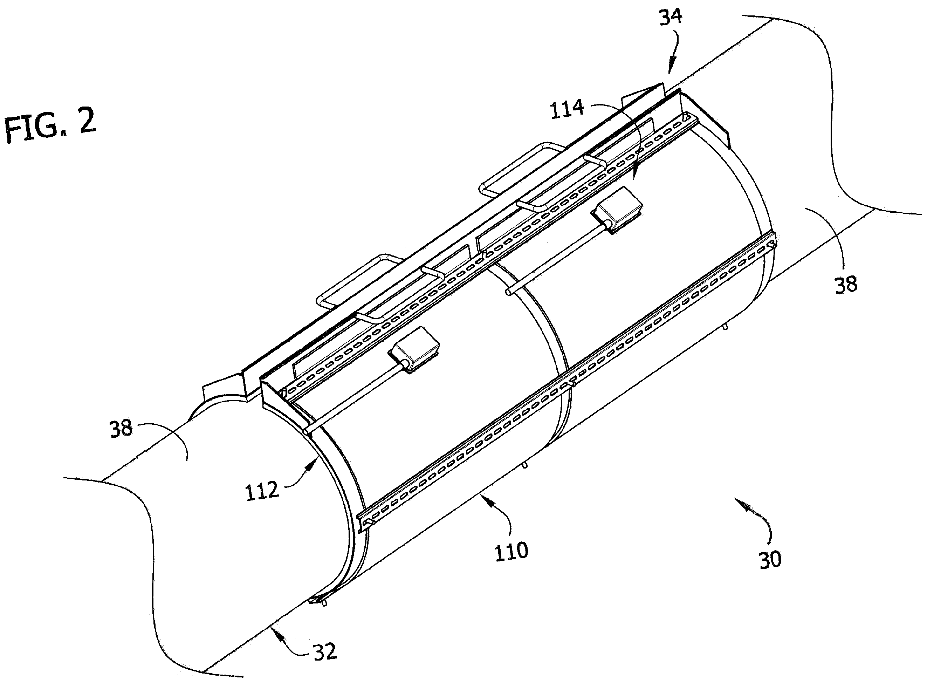

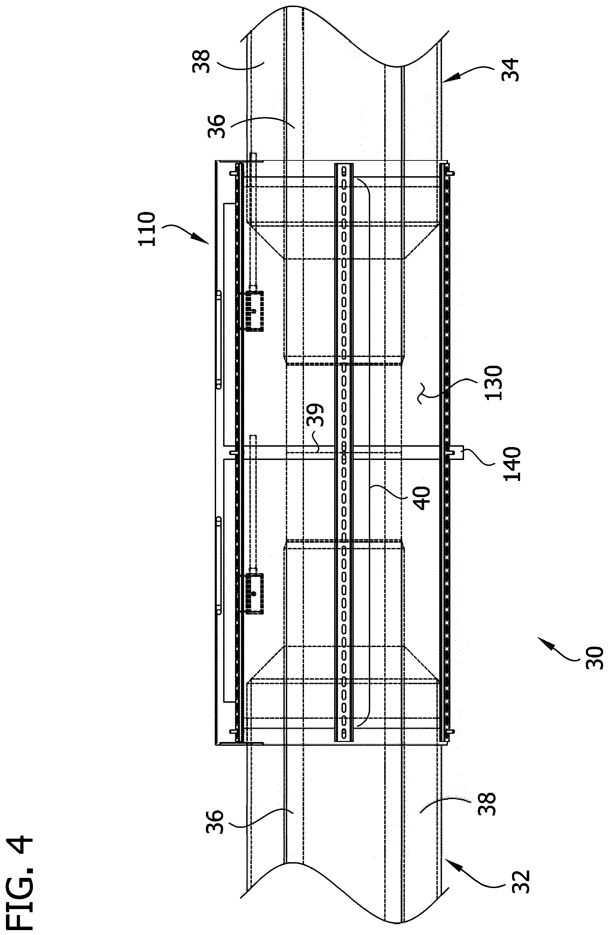

Referring now to FIGS. 2-4, an insulated pipe assembly is generally indicated at reference number 30. The insulated pipe assembly 30 comprises a first prefabricated insulated pipe 32 and a second prefabricated insulated pipe 34. Each prefabricated insulated pipe comprises a steel carrier pipe 36 and insulation 38 formed along a majority of the length of the carrier pipe. Each carrier pipe 36 has exposed first and second end portions, with no insulation formed thereupon. In FIGS. 2 and 4, the right exposed end portion of the first prefabricated insulated pipe 32 is welded to the left exposed end of the second prefabricated pipe 34 at a weld 39 (Fig. 4). The welded-together pipes 32, 34 define a field joint section 40 extending lengthwise from the end portion of the insulation 38 on the first pipe 32 to the opposing end portion of the insulation 38 on the second pipe 34. A field joint mold assembly in accordance with the present disclosure is generally indicated at reference number 110. The field joint mold assembly 110 can be operatively mounted on the field joint section 40 of the pipe assembly 30 to facilitate field-application of insulation to the field joint section.

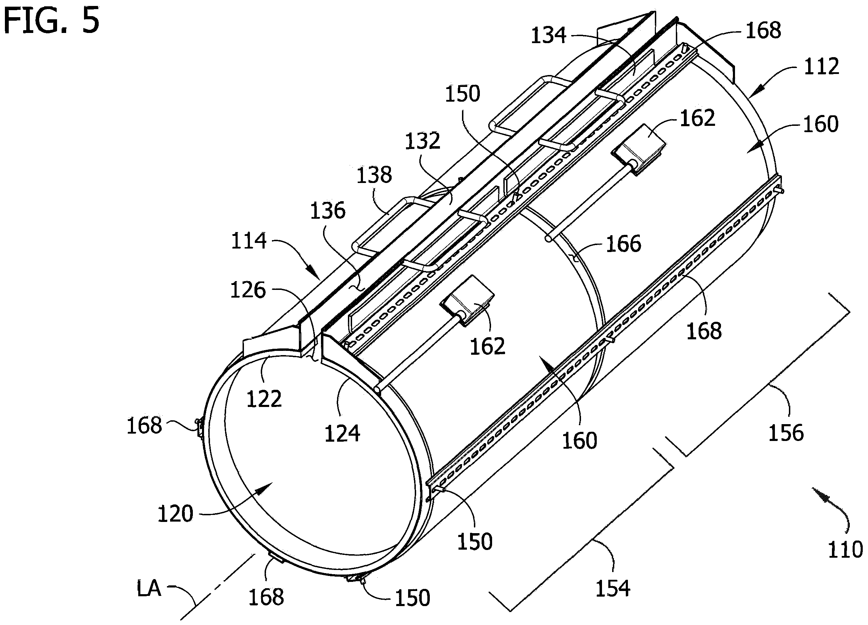

Referring to FIGS. 5-6, the field joint mold assembly 110 broadly comprises a mold body 112 and an integrated heating system 114 mounted on the mold body. As will be explained in further detail below, the heating system 114 is configured for simultaneously conducting heat to a majority of the surface area of the mold body 112 without an open flame. Below, this disclosure first describes the illustrated mold body 112 in detail before addressing exemplary features of the heating system 114.

The mold body 112 has a first end portion, a second end portion, and a length extending along a longitudinal axis LA from the first end portion to the second end portion. The illustrated mold body 112 comprises a mold form sheet 120 having a first longitudinal edge margin 122, an opposite second longitudinal edge margin 124, and a width extending from the first longitudinal edge margin to the second longitudinal edge margin.

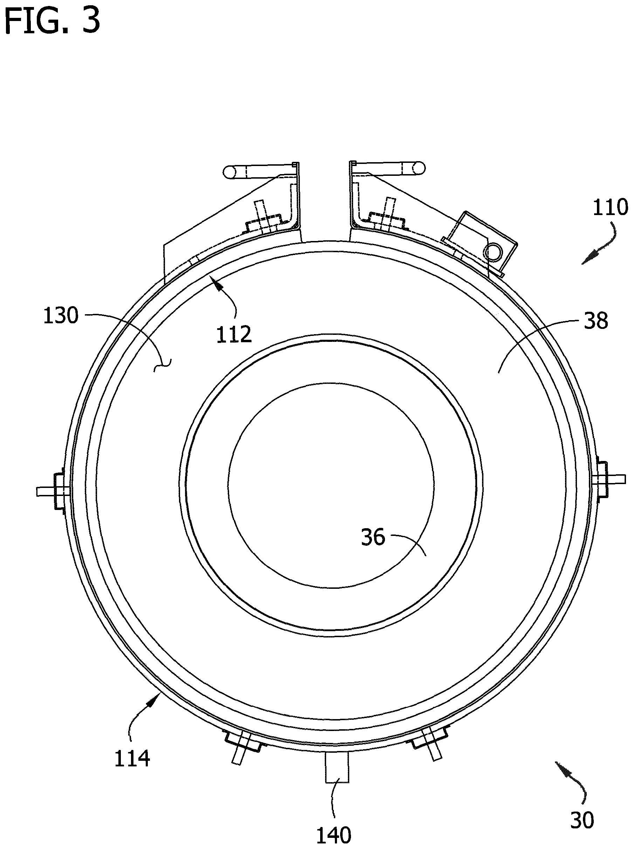

The mold form sheet 120 has been worked into the shape of a cylindrical clamshell-type field joint mold. Hence, the width of the mold form sheet 120 extends circumferentially about the longitudinal axis LA, making a circular shape. The first longitudinal edge margin 122 opposes the second longitudinal edge margin 124 in adjacent, spaced apart relation therewith so that there is a small gap 126 between the opposing edge margins 122, 124. Like the conventional mold body 12, the mold body 112 can be fitted onto the field joint section 40 of the pipe assembly 30 by opening the mold body such that the gap 126 expands to accept the field joint section into the interior of the mold body. When the mold body 112 is operatively mounted on the field joint section 40, the interior surface of the mold form sheet 120 defines a mold cavity 130 around the field joint section 40, as shown in FIGS. 3-4.

Suitably, the mold form sheet 120 has a smooth interior surface. In an exemplary embodiment, the mold form sheet 120 is made of stainless steel, e.g., AISI 316 stainless steel. The inventor believes that the stainless steel mold form sheet 120 provides a smoother surface finish and makes demolding easier when compared with conventional carbon steel mold bodies.

Referring to FIGS. 5-7, the mold body 112 further comprises a first flange 132 on the first longitudinal edge margin 122 and a second flange 134 on the second longitudinal edge margin 124. In the illustrated embodiment, the first and second flanges 132, 134 are welded onto the mold form sheet 120. However, it will be understood that the flanges may be joined to the form sheet in other ways, or may be integrally formed sections of the form sheet, without departing from the scope of the disclosure. During use, when the mold body 112 has been fitted onto the field joint section 40, a user can engage clamps (e.g., C clamps) with the flanges 132, 134 to secure the mold body 112 in place on the pipe assembly 110. This causes the end portions of the mold body 112 to tightly grip the end portions of the insulation 38 on the first and second prefabricated insulated pipes 32, 34. Once the mold body 112 has been clamped in place, the first and second longitudinal flanges 132, 134 define an elongate waste receptacle 136 (sometimes called a "mohawk") therebetween for receiving a discardable waste portion of the curable insulation material imparted into the mold cavity 130. Optionally, handles 138 may be attached to the flanges 132, 134.

The mold assembly 110 further comprises an injection port 140 opening through the mold body such that curable insulation material can be imparted through the injection port into the mold cavity 130. Suitably, the injection port 140 is diametrically opposite the gap 126 and mohawk 136.

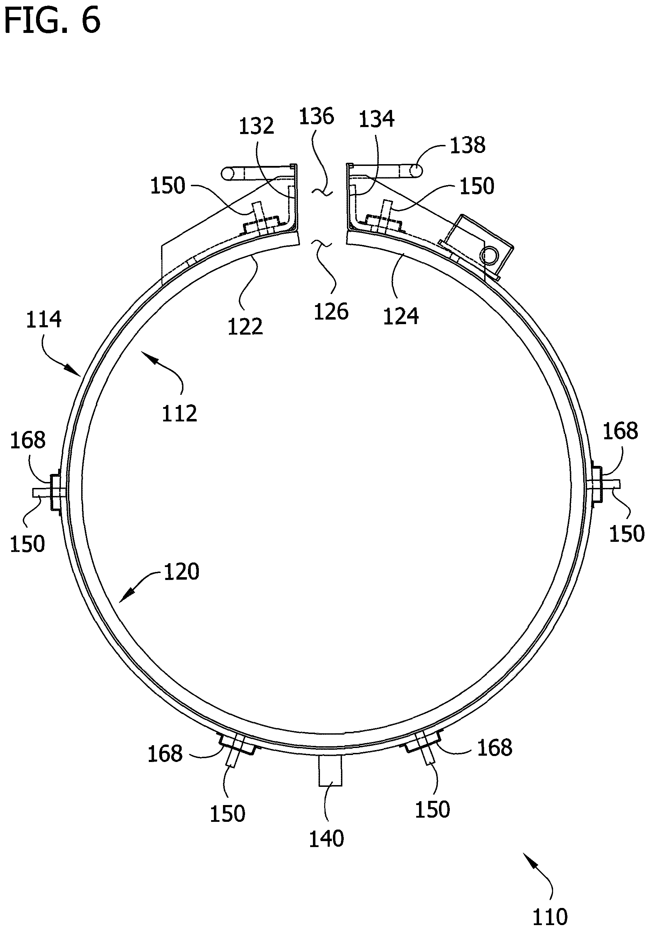

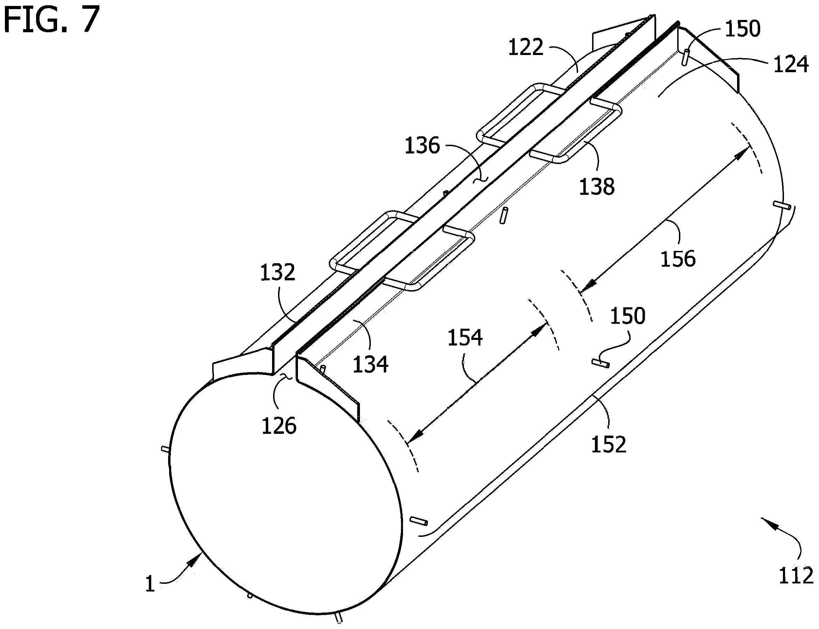

The mold body 112 further comprises a plurality of retention bar mounting studs 150 arranged in individual stud rows 152 (see FIG. 7 with an annotation indicating the location of one individual stud row 152). The stud rows 152 are spaced apart circumferentially about the longitudinal axis LA. Each stud 150 in FIG. 6 corresponds with one respective stud row 152. Hence, there are six stud rows 152 in the illustrated embodiment. In one embodiment, each stud row 152 comprises at least three studs 150, including a first stud at the first end portion of the mold body, a second stud at the second end portion of the mold body, and a third (middle) stud midway between the first stud and the second stud along the longitudinal axis LA. In the illustrated embodiment, the third (middle) stud 150 of each stud row 152 is aligned lengthwise with the injection port 140. As shown in FIG. 7, the mold form sheet 120 comprises a first non-studded longitudinal section 154 between the studs 150 along the first end portion of the mold body 112 and the middle studs. The mold form sheet 120 further comprises a second non-studded longitudinal section 156 between the middle studs 150 and the second end portion studs. As will be explained in further detail below, the studs 150 and non-studded longitudinal sections 154, 156 function to operatively mount the heating system 114 on the mold body 112 in a way that enables the heating system to promote uniform elevated temperature distribution in the mold cavity.

Referring to FIG. 5, the heating system 114 is mounted on the mold body 112 for conducting heat directly onto a majority of the surface area of the mold body simultaneously, which promotes uniform elevated temperature distribution along the mold form sheet 120 and throughout the mold cavity 130. The heating system 114 comprises an electrical heater 160 and a temperature controller 162 for controlling the electrical heater. In the illustrated embodiment, the heating system 114 comprises first and second first and second heaters 160 and first and second temperature controllers 162 for controlling the first and second heaters, respectively. Suitably, each temperature controller 162 can be one of a temperature switch, a thermostat and a rheostat. Other types of temperature controllers are also possible. In the illustrated embodiment, each temperature controller 162 is a temperature switch contained in a blast-proof housing. In one or more embodiments, each heater 160 comprises a flexible heating pad, e.g., a resistive heating element encased in silicone rubber.

The first and second heating pads 160 are supported on the mold body 112 so that the first heating pad covers the first non-studded longitudinal section 154 and the second heating pad covers the second non-studded longitudinal section 156. Each of the first and second heating pads 160 comprises a contiguous pad extending from a first longitudinal edge margin overlapping the first longitudinal edge margin 122 of the mold form sheet 120 to a second longitudinal edge margin overlapping the second longitudinal edge margin 124 of the mold form. The first and second heating pads 160 are separated by a central gap 166 along which the injection port 140 and middle studs 150 are located.

To hold the heading pads 160 in place on the mold body 112, a set of retention bars 168 are mounted on the mold body such that the first and second heating pads are sandwiched between the mold body 112 and the retention bars. Each retention bar may suitably comprise a bar of Ω-shaped cross section, L-shaped cross section, or other cross-sectional shape. As can be seen in FIG. 6, each retention bar 168 is supported on the mold body 112 by a respective row 152 of mounting studs 150. Hence, each retention bar 168 has a first end portion and a second end portion spaced apart along the longitudinal axis LA, wherein the first end portion of each retention bar is fastened to the stud 150 located at the first end portion of the mold body (broadly, a first fastening point), the second end portion of each retention bar is fastened to the stud 150 located at the second end portion of the mold body (broadly, a second fastening point), and the middle of each retention bar is fastened to the middle stud (broadly, a third fastening point). The first heating pad 160 is located between the first and third fastening points along the longitudinal axis LA, and the second heating pad is located between the second and third fastening points along the longitudinal axis.

The field joint mold assembly 110 can be used to insulate field joint sections 40 of an insulated pipe assembly 110 using a familiar process except that, instead of manually applying heat to the mold body 112 using one or more open flame torch heaters, the heating system 114 is used to uniformly heat the mold body and mold cavity to an elevated temperature. Preferably, an open flame is never used during a field joint molding process in accordance with the present disclosure. In an exemplary embodiment, the heating system 114 is used while injecting curable insulation material into the mold cavity 130. In certain embodiments, the heating system 114 is used while curing the curable insulation material received in the mold cavity. In one or more embodiments, the controllers 162 heat the mold bodies to two different temperature levels (e.g., two different thermostatic or rheostatic set points) during an injection step and a curing step of the molding process. Still other ways of employing the integrated heating system 114 during a field joint molding process can be used without departing from the scope of the disclosure. Whenever heat is needed, the heating system 114 can apply heat to the mold in a distributed and uniform manner to evenly raise the temperature of the mold body 112 and mold cavity 130. Accordingly, it can be seen that the field joint mold assembly 110 provides a controlled solution for uniformly heating the mold body 112 without an open flame.

While this specification contains many specific implementation details, these should not be construed as limitations on the scope of any inventions or of what may be claimed, but rather as descriptions of features specific to particular implementations of particular inventions. Certain features that are described in this specification in the context of separate implementations can also be implemented in combination in a single implementation. Conversely, various features that are described in the context of a single implementation can also be implemented in multiple implementations separately or in any suitable sub-combination. Moreover, although features may be described above as acting in certain combinations and even initially claimed as such, one or more features from a claimed combination can in some cases be excised from the combination, and the claimed combination may be directed to a sub-combination or variation of a sub-combination.

## Claims

1. A field joint mold assembly comprising:
a mold body configured to be disposed on a field joint section of a pipe assembly such that the mold body defines a mold cavity around the field joint section;
an injection port opening through the mold body such that curable insulation material can be imparted through the injection port into the mold cavity; and
a heating system mounted on the mold body for uniformly heating the mold body to an elevated temperature to promote even elevated temperature distribution inside the mold cavity.

2. The field joint mold assembly of claim 1, wherein the heating system comprises an electrical heater and a temperature controller for controlling the electrical heater, optionally wherein the temperature controller is one of a temperature switch, a thermostat, and a rheostat.

3. The field joint mold assembly of claim 2, wherein the electrical heater is a heating pad.

4. The field joint mold assembly of claim 3, wherein the heating pad is a first heating pad and the heating system further comprising a second heating pad.

5. The field joint mold assembly of claim 4, wherein the mold body has a longitudinal axis and a first longitudinal section and a second longitudinal section spaced apart along the longitudinal axis, the first heating pad covering the first longitudinal section and the second heating pad covering the second longitudinal section.

6. The field joint mold assembly of claim 5, wherein the first heating pad and the second heating pad are separated by a gap and wherein the injection port is located in the gap.

7. The field joint mold assembly of claim 5 or claim 6, further comprising at least one retention bar mounted on the mold body such that the first heating pad and the second heating pad are sandwiched between the mold body and the retention bar whereby the retention bar holds the first heating pad and the second heating pad on the mold body.

8. The field joint mold assembly of claim 7, wherein the at least one retention bar comprises a plurality of retention bars mounted on the mold body at circumferentially spaced apart locations about the longitudinal axis.

9. The field joint mold assembly of claim 8, wherein each retention bar has a first end portion and a second end portion spaced apart along the longitudinal axis, the first end portion of each retention bar being fastened to the mold body at a first fastening point, the second end portion of each retention bar being fastened to the mold body at a second fastening point, the first heating pad and second heating pad being located between the first fastening point and the second fastening point along the longitudinal axis, optionally wherein each retention bar is further fastened to the mold body at a third fastening point between the first heating pad and the second heating pad.

10. The field joint mold assembly of any one of claims 4 to 9, wherein the temperature controller is a first temperature controller for the first heating pad and the heating system further comprises a second temperature controller for the second heating pad.

11. The field joint mold assembly of claim any one of claims 3 to 10, wherein the heating pad comprises a resistive heating element encased in silicone rubber.

12. The field joint mold assembly of any one of claims 1 to 11, wherein the mold body comprises a stainless steel mold form sheet.

13. The field joint mold assembly of any one of claims 1 to 12, wherein the mold body has a first end portion and a second end portion, and a length extending along a longitudinal axis, the mold body comprising a mold form sheet having a first longitudinal edge margin, an opposite second longitudinal edge margin, and a width extending from the first longitudinal edge margin to the second longitudinal edge margin, the mold form sheet worked into a clamshell-type field joint mold shape such that the width extends circumferentially about the longitudinal axis and the first longitudinal edge margin opposes the second longitudinal edge margin in adjacent, spaced apart relation therewith, optionally wherein the mold body further comprises a plurality of retention bar mounting studs arranged in individual stud rows spaced apart circumferentially about the longitudinal axis, optionally wherein each of the individual stud rows comprises three of the retention bar mounting studs.

14. The field joint mold assembly as set forth in claim 13, wherein the mold body further comprises a first longitudinal flange on the first longitudinal edge margin and a second longitudinal flange on the second longitudinal edge margin, the first and second longitudinal flanges configured to define an elongate waste receptacle therebetween for receiving discardable waste of the curable insulation material, optionally wherein the first longitudinal flange and the second longitudinal flange are at an upper end portion of the mold body and the injection port is diametrically opposite the elongate waste receptacle at a lower end portion of the mold body.

15. A method of insulating a field joint, the method comprising:
injecting curable insulation material into a mold cavity defined by a field joint mold assembly disposed on a field joint section of a pipe assembly;
curing the curable insulation material in the mold cavity to form cured insulation for insulating the field joint section of the pipe assembly; and
while performing at least one of said injecting and said curing, conducting heat from a heating system to majority of a surface area of a form of the field joint mold assembly to uniformly heat the mold cavity to an elevated temperature.
